**Europäisches Patentamt**

**European Patent Office**

**Office européen des brevets**

(19)

(11) Numéro de publication : **0 502 799 A1**

(12) # DEMANDE DE BREVET EUROPEEN

(21) Numéro de dépôt : **92430006.4**

(22) Date de dépôt : **04.03.92**

(51) Int. Cl.⁵ : **B60R 19/00, B62D 25/08**

(30) Priorité : **07.03.91 FR 9102897**

(43) Date de publication de la demande :
**09.09.92 Bulletin 92/37**

(84) Etats contractants désignés :
**DE ES FR GB IT SE**

(71) Demandeur : **Pomero, Claude**
**14 Avenue du 22 Août 1944**
**F-34500 Béziers (FR)**

(72) Inventeur : **Pomero, Claude**
**14 Avenue du 22 Août 1944**
**F-34500 Béziers (FR)**

(74) Mandataire : **Moretti, René et al**
**c/o Cabinet BEAU DE LOMENIE**
**"Prado-Mermoz" 232, Avenue du Prado**
**F-13008 Marseille (FR)**

(54) **Dispositif de déflexion des roues d'une automobile au moment d'une collision.**

(57)    La présente invention a pour objet un dispositif de sécurité passive intégré dans la carrosserie d'une automobile et destiné à protéger les passagers de la pénétration des roues du véhicule dans l'habitacle au moment d'une collision avec un autre véhicule ou avec un obstacle.

Un dispositif selon l'invention comporte au moins une plaque (1) de déflexion disposée sensiblement verticalement et liée solidement à la carrosserie dudit véhicule, laquelle plaque comporte sur sa face externe (21) un moyen de glissement de pneumatique, laquelle plaque est placée près de la roue, en biais, par rapport à un plan (P₁) vertical longitudinal dudit véhicule.

Le secteur technique de l'invention est celui de la construction des véhicules automobiles.

FIG. 2

EP 0 502 799 A1

La présente invention a pour objet un dispositif de sécurité passive intégré dans la carrosserie d'une automobile et destiné à protéger les passagers de la pénétration des roues du véhicule dans l'habitacle au moment d'une collision avec un autre véhicule ou avec un obstacle. Le secteur technique de l'invention est celui de la construction des véhicules automobiles.

Plus de cinquante pour cent des automobilistes blessés ou tués dans un accident de la route le sont dans un choc frontal, c'est-à-dire que la partie avant du véhicule rencontre un obstacle et s'écrase contre lui : cette partie avant des automobiles modernes est conçue pour se déformer afin d'absorber l'énergie cinétique du choc ; cependant la grande majorité des chocs n'implique pas la totalité de l'avant du véhicule, mais une partie seulement : ce sont les chocs décalés, les plus dangereux car seule une partie des pièces déformables est impliquée dans la collision. Dans ce cas, cette déformation atteint non seulement le compartiment avant du véhicule, mais également l'habitacle. C'est dans ce cas, le plus général statistiquement puisqu'il dépasse 70 % des collisions frontales, que les roues du véhicule jouent un rôle aggravant dans les conséquences de la collision ; en effet, les jantes des roues, conçues pour résister à des efforts considérables, sont pratiquement indéformables et viennent perforer, au moment du choc l'habitacle contenant les passagers ; ceci est vrai pour les roues avant qui blessent en général les membres inférieurs des passagers assis à l'avant du véhicule, mais également pour les roues arrière et aussi pour la roue de secours quand elle est placée horizontalement dans le coffre arrière ou dans le compartiment avant du véhicule.

La pénétration des roues dans l'habitacle contribue également à affaiblir sa rigidité, qui est déjà relativement peu importante, et aggrave donc les déformations dues au choc.

Les conséquences de cette pénétration des roues sont rarement directement mortelles, mais de très nombreux accidents seraient de plus faible gravité, si l'on pouvait l'éviter.

Les constructeurs d'automobiles, conscients de ce danger, apportent diverses solutions : on peut citer Renault qui renforce par une cornière les parties du passage de roues susceptibles d'être perforées ; Mercédes-Benz protège les pieds du conducteur par une sorte de coquille en mousse rigide placée dans le revêtement de plancher qui réduit les contraintes dues à la déformation de ce dernier.

Cependant, ces solutions sont inefficaces dès que l'énergie du choc est élevée.

L'objectif de la présente invention est d'intégrer un dispositif de sécurité dans la carrosserie de la voiture, qui évite la pénétration des roues dans l'habitacle, et qui transforme également l'élément agressif qu'est la roue en élément de protection pendant le choc.

L'objectif de l'invention est également atteint en procurant un dispositif de déflexion de roues d'un véhicule automobile, au moment d'une collision, comportant de préférence, dans chaque passage de roue, au moins une plaque de déflexion (de préférence sensiblement rigide et de grande surface, de préférence métallique, disposée sensiblement verticalement et liée solidement à la carrosserie dudit véhicule (par exemple à un longeron), laquelle plaque comporte sur sa face externe un moyen favorisant le glissement des pneumatiques desdites roues sur ladite plaque, laquelle plaque est placée près de la roue, en biais, par rapport à un plan vertical longitudinal dudit véhicule.

Lesdits moyens favorisant le glissement des pneumatiques sur ladite plaque sont préférentiellement réalisés, soit à l'aide d'un produit glissant appliqué sur la face externe de ladite plaque, lequel produit glissant est un produit glissant pour le caoutchouc, plus précisément un produit glissant pour la matière constituant le principal composant desdits pneumatiques desdites roues, soit par un écran disposé sur la face externe de ladite plaque et susceptible de glisser sur celle-ci du fait de l'effort exercé sur la face externe dudit écran par lesdits pneumatiques desdites roues, lequel effort est susceptible d'apparaître du fait de la déformation desdits passages de roues due au choc et du déplacement consécutif desdites roues.

Dans le cas de réalisation desdits moyens de glissement par ledit écran disposé sur la face externe de ladite plaque, ledit écran peut être réalisé à l'aide d'une matière favorisant le glissement dudit écran sur ladite plaque ou alternativement un produit glissant peut être prévu entre ledit écran et ladite plaque afin de favoriser le glissement dudit écran sur ladite plaque et de favoriser ainsi le glissement des pneumatiques par rapport à ladite plaque.

Selon des caractéristiques particulières de l'invention :

– ledit dispositif comporte pour chacune- desdites roues avant dudit véhicule ladite plaque de déflexion avant, et ladite plaque de déflexion arrière;

– ladite plaque fait un angle avec ledit plan vertical longitudinal dudit véhicule qui est compris entre 20 et 70°, et de préférence compris entre 35 et 55°;

– une droite horizontale, tangente et/ou, passant par les extrémités latérales respectives desdites plaques de déflexion arrière et avant des roues avant dudit véhicule, croise ledit plan vertical longitudinal dudit véhicule en un point situé en avant desdites plaques respectives ;

– une droite, tangente et/ou passant par les extrémités latérales respectives desdites plaques de déflexion arrière et avant de roues arrière dudit véhicule, croisent ledit plan vertical longitudinal dudit véhicule en un point situé respectivement en arrière desdites plaques;

– une section verticale ou horizontale de ladite plaque a un profil en forme de droite, ou a une forme courbe telle que arc de cercle, ellipse, parabole, hyperbole, esse, clothoïde;

– ledit produit glissant pour le caoutchouc provoque un coefficient de frottement statique entre le caoutchouc et ladite plaque inférieur à 0,3, de préférence inférieur à 0,2 et plus particulièrement inférieur à 0,1;

– ledit produit glissant est choisi parmi le polytetrafluoroéthylène, un produit graisseux ou huileux, un produit à base de graphite ou de résine silicone;

– un écran épousant la forme de ladite face externe de ladite plaque est placé devant ladite plaque, ledit produit glissant étant appliqué entre ledit écran et ladite plaque de déflexion, ledit écran étant fixé de manière peu solide à ladite plaque par des moyens de fixation susceptibles de se briser en cas de choc, plus précisément susceptibles de se briser au moment du choc de ladite roue sur ladite plaque.

– ledit écran épousant la forme de la face externe de ladite plaque, est principalement constitué d'une matière ayant un faible (par exemple inférieur ou égal à 0,3) coefficient de frottement statique avec ladite plaque et peut donc glisser lui-même sur cette dernière au moment du choc ;

L'objectif de l'invention est atteint en plaçant un dispositif dans les passages de roue (ou dans le réceptacle de la roue de secours) qui dévie la roue parce qu'il est placé près de la roue et de biais sur sa trajectoire pendant le choc, et qui la place donc en position de bouclier, c'est-à-dire en travers, protégeant ainsi l'habitacle d'une éventuelle intrusion d'une autre partie métallique.

Avantageusement, on place sur le dispositif un produit glissant facilitant le glissement du pneumatique, et éventuellement on recouvre ce produit d'un écran qui le protègera des salissures et des intempéries.

Cet écran, fixé de manière peu solide sur le dispositif, sera écrasé par le pneumatique contre celui-ci : au moment du choc le produit de glissement et la rupture des fixations dudit écran conduiront alors le pneumatique à être dévié et à ne pas perforer l'habitacle, grâce à l'inclinaison adéquate du dispositif.

Selon un premier mode de réalisation, un véhicule automobile selon l'invention comporte au moins une plaque de préférence métallique placée dans les passages de roue, dans la zone comprise entre la roue et l'habitacle.

La fixation de cette plaque sur la carrosserie du véhicule doit être telle que la roue poussée violemment au moment du choc soit déviée en biais, par création d'un moment de rotation par rapport à un axe de préférence vertical passant par le centre de la roue et contenu dans le plan de la roue, contenant le pneumatique.

Pour les roues avant directrices, ce mouvement est facile puisque un système mécanique, souvent appelé pivot et destiné au braquage des roues dans les virages, organise déjà cette rotation.

Pour les roues arrière et la roue de secours, le choc doit être plus violent et doit tordre dans le premier cas l'axe de cette roue arrière pour que cette dernière puisse s'appuyer sur la plaque de déflexion.

On voit donc que la qualité fondamentale du dispositif de sécurité est de créer, au moment du choc, ce mouvement de rotation de la roue autour d'un axe de préférence vertical pour les roues fixées sur les essieux, et autour d'un axe horizontal pour la roue de secours. Cette plaque est placée par exemple sensiblement verticalement dans le cas des roues sur essieux, et fait un angle avec le plan vertical, axial, longitudinal du véhicule compris entre 20° et 70°, de préférence entre 35 et 55°.

L'orientation de cet angle est telle qu'une droite horizontale tangente à la plaque placée près des roues avant ira vers l'avant du véhicule si cette droite se rapproche du plan vertical axial longitudinal, et ira vers l'arrière en se rapprochant de ce même plan, si elle est tangente à la plaque placée près des roues arrière.

Cette orientation est destinée à repousser vers l'extérieur de la voiture les roues poussées par le choc contre les plaques, que le choc soit avant ou arrière. La plaque de déflexion reçoit de préférence un revêtement glissant, tel que le coefficient de frottement statique du caoutchouc sur la plaque devienne inférieur à 0,3, de préférence à 0,2, plus particulièrement à 0,1. Ce moyen favorisant le glissement est nécessaire car le caoutchouc a un coefficient de frottement très élevé avec la plupart des matériaux : on peut donc arriver à un blocage du pneumatique sur le dispositif malgré le biais de celui-ci, sauf si ce biais est particulièrement prononcé, c'est-à-dire s'il dépasse 60° environ ; mais dans ces conditions, l'encombrement des plaques deviendra important ; le revêtement glissant permet alors d'éviter de recourir à des plaques de déflexion présentant un angle trop important.

Peu de produits glissants sont efficaces avec le caoutchouc. On peut citer en particulier le graphite, le polytetrafluoroetylène, certaines résines silicones, le bisulfure de Molybdène, et les produits graisseux et huileux.

C'est pourquoi il pourra être intéressant en variante de substituer à ce produit glissant un écran, surface solide dont la matière choisie glisse facilement sur la plaque, c'est-à-dire dont le coefficient de frottement avec la plaque est inférieur ou égal à 0,3 : si cet écran est fixé sur la plaque par des liaisons qui peuvent se rompre facilement, il conduira alors à la déflexion de la roue sur la plaque.

– la plaque n'est pas nécessairement plate mais peut avoir une section, dans un plan horizontal et dans un plan vertical, dont le profil est en forme de courbe connue par exemple d'arc de cercle, d'ellipse, de parabole, d'hyperbole, d'esse, de clothoïde ou plus généralement toute forme qui permet la déflexion de la roue poussée par le choc vers l'extérieur, sans blocage.

Selon un mode de réalisation préférentiel, un véhicule automobile selon l'invention comporte au moins une plaque de préférence métallique, placée également dans le passage de roue, mais dans la zone comprise entre la roue et le pare-chocs avant.

L'inclinaison décrite ci-dessus est conservée : c'est-à-dire qu'un véhicule qui serait équipé de deux plaques déflectrices par roue aurait donc cette dernière encadrée par deux plaques sensiblement parallèles, sensiblement verticales et biaises. Dans ce mode de réalisation, c'est donc la partie avant de l'aile qui vient appuyer sur la roue par l'intermédiaire de la plaque biaise et glissante, et force donc la roue à pivoter autour de son axe vertical : la roue étant alors braquée, la poursuite de l'écrasement dû au choc plaquera alors la roue contre l'habitacle, mais en travers, ce qui contribuera à protéger cet habitacle puisque la roue sert alors de bouclier.

L'emploi d'une ou deux plaques par roue selon l'invention conduit à la déflexion de cette roue au moment du choc, et donc réduit le risque de blessures dues à la pénétration de la jante dans l'habitacle : de plus, la roue placée alors de travers améliore la protection des passagers.

Selon un autre mode de réalisation particulier un véhicule automobile selon l'invention qui comporte un réceptacle de roue de secours, généralement obtenu par déformation d'une tôle, est équipé d'une plaque recouverte d'un revêtement glissant comme décrit dans les deux modes de réalisation précédents ; cette plaque est placée dans un plan oblique par rapport au plan axial contenant le pneumatique : la roue étant placée sensiblement horizontalement dans son réceptacle, en général au fond du coffre, il importe que cette plaque plane soit perpendiculaire au plan vertical longitudinal axial du véhicule, et que sa trace sur ce plan face un angle de l'ordre de 45° avec l'horizontale : si la plaque est mise à l'arrière du réceptacle, c'est-à-dire du côté du pare-chocs arrière, cet angle s'ouvrira vers l'avant du véhicule en descendant, par rapport à l'horizontale.

Si la plaque est placée plutôt entre l'habitacle et le réceptacle, cet angle s'ouvrira vers l'avant du véhicule en montant.

Dans les deux cas donc, l'habitacle s'évasera dans la zone de la plaque, d'environ 45°, il est préférable de placer la plaque dans l'axe longitudinal du véhicule, entre le réceptacle et le pare-chocs arrière : en effet au moment du choc arrière, la roue, comprimée par la plaque glissante inclinée, se soulèvera en ce point, en prenant appui sur la partie avant du réceptacle : elle se relèvera donc, et se mettra en position de bouclier entre l'auto tamponnante et l'habitacle. Dans le cas de la plaque placée entre l'habitacle et le réceptacle, la roue sera soulevée à l'avant, mais elle a moins de chances de se placer en position de bouclier, si le coffre est chargé par exemple.

Le raisonnement est le même si le réceptacle de la roue de secours est dans le compartiment avant : il sera préférable de placer aussi la plaque entre le pare-chocs et le réceptacle de la roue de secours.

La description suivante se réfère aux dessins annexés qui représentent, sans aucun caractère limitatif, des exemples de réalisation de véhicules selon l'invention.

La figure 1 représente une vue en perspective latérale partielle d'une carrosserie automobile selon l'invention, sans roue ni pièce mécanique afin de bien distinguer le mode de réalisation.

La figure 2 représente une demie coupe partielle horizontale de la figure 1, à hauteur de l'axe des roues.

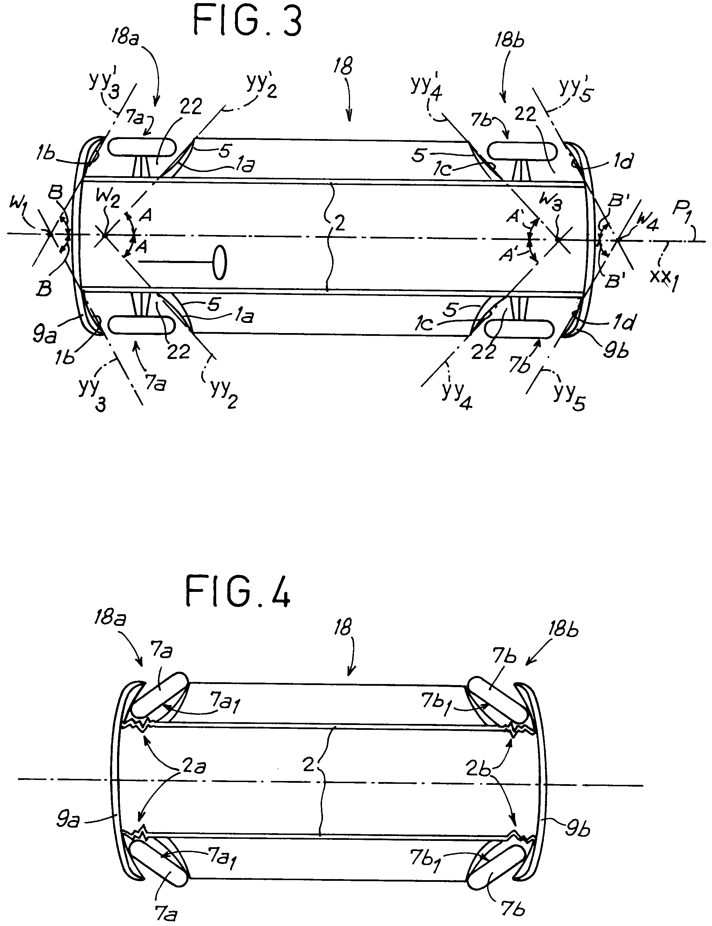

Aux figures 3 et 4, on a représenté en vue en plan schématique un véhicule 18 dans deux situations, respectivement avant et après une double collision à l'avant et à l'arrière.

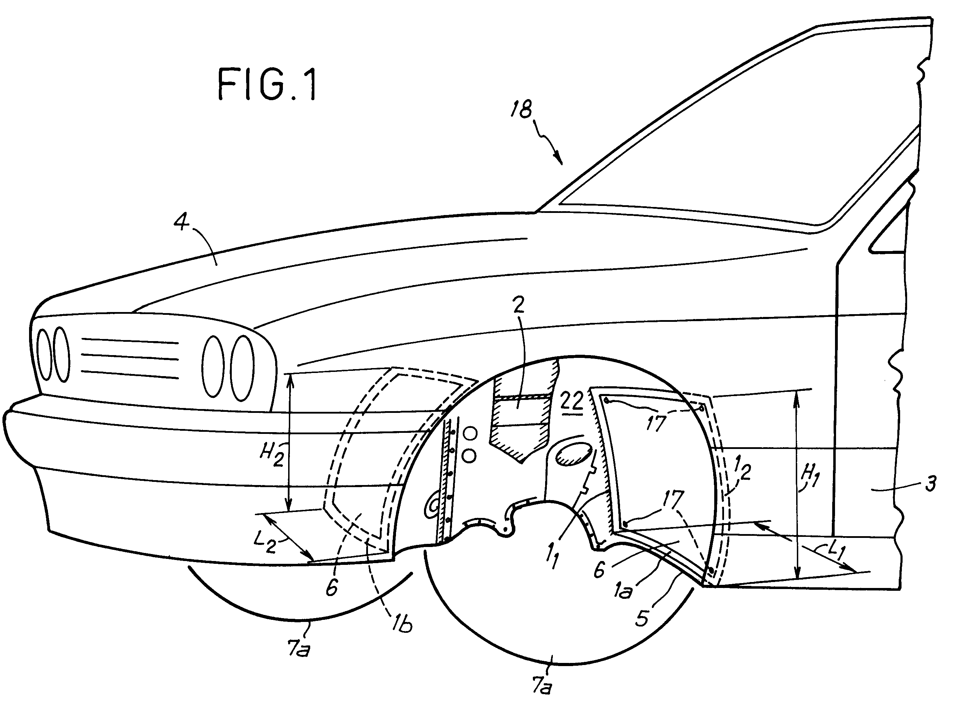

La figure 1 représente la carrosserie d'une automobile 18 équipée de dispositifs selon l'invention, sans les roues ni les pièces mécaniques (les roues avant 7A sont simplement suggérées par des cercles).

Cette carrosserie comprend une première pièce 1A, appelée plaque (arrière) de déflexion. Cette plaque en acier de 3 mm d'épaisseur par exemple est placée sensiblement verticalement et est soudée d'un premier côté par un bord latéral $1_1$ sur le passage 22 de roues s'appuyant sur le longeron 2 qui est une sorte de poutre métallique solidement fixée à l'habitacle 3, placée en général longitudinalement entre le compartiment moteur 4 et lesdites roues. Ladite plaque est soudée de l'autre côté par un bord latéral 12 sur la cloison 5 séparant l'habitacle dudit compartiment moteur.

Cette plaque 1A est recouverte par une seconde plaque 6 métallique, thermoplastique ou composée en tout autre matériau adéquat formant écran. Cet écran 6 peut être d'une nature telle qu'il glisse bien sur ladite plaque déflectrice 1A, ou bien un produit glissant tel que graphite, graisse, polytetrafluoroetylène, bisulfure de molybdène, résine silicone, peut être placé entre les deux plaques 1A et 6 ; dans un autre mode de fabrication ledit écran 6 peut être supprimé, et seul un produit glissant ci-dessus peut alors recouvrir ladite plaque 1A.

Au moment du choc à l'avant, l'écrasement des ailes conduit la roue à s'appuyer sur ladite plaque 1A munie ou non de ladite plaque 6. Le produit glissant sur ladite plaque 1A placée de biais conduit alors au braquage forcé de ladite roue ;

Une plaque avant 1B a également été représentée suivant un autre mode de réalisation : c'est cette plaque avant 1B qui vient s'appuyer sur ladite roue pour la faire pivoter autour de son axe vertical, et non la roue qui s'appuie sur ladite plaque avant. Le résultat est cependant le même.

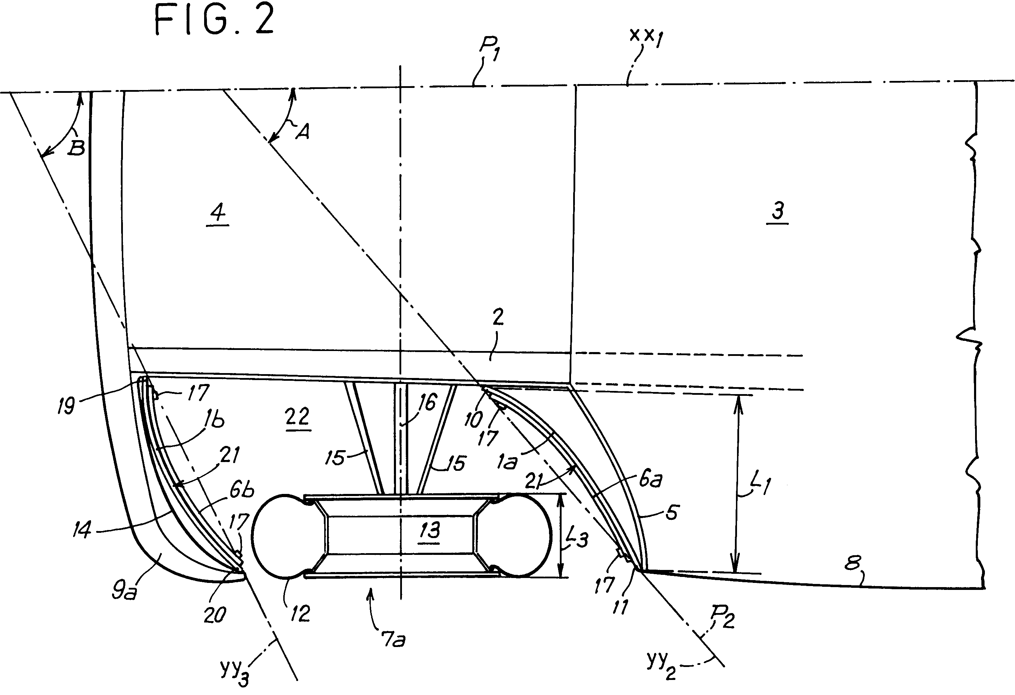

Avantageusement, lesdites plaques de déflexion arrière 1A et plaque de déflexion avant 1B de ladite roue avant 7A (ainsi éventuellement que lesdits écrans 6 dont elles sont munies) ont une hauteur (respectivement $H_1$ et $H_2$) importante (par exemple au moins égale à une demi-hauteur ou diamètre de ladite roue) et une largeur (respectivement $L_1$ et $L_2$) également importante, par exemple au moins égale à la largeur de ladite roue, (repère $L_3$ de la figure 2).

De préférence, dans le cas ou ledit dispositif comporte ledit écran 6, celui-ci est fixé par des moyens 17 de fixation de type "fusible mécanique", c'est-à-dire susceptibles de se rompre sous l'effet de la pression exercée par ladite roue sur le dispositif, lequel écran glisse alors sur ladite face externe 21 de la plaque de déflexion qui joue ainsi son rôle de déflecteur.

Une plaque peut de la même manière être placée entre la roue arrière, et l'habitacle, dans le même but fonctionnel que les plaques 1A et 1B, mais pour défléchir la roue arrière dans un choc à l'arrière du véhicule (comme illustré aux figures 3 et 4).

La figure 2 est un schéma en demie coupe partielle de l'avant d'un véhicule suivant un plan horizontal passant par l'axe des quatre roues. Une roue 7A comportant une jante 13, un pneumatique 12, raccordée à un arbre d'entraînement 16 (ou cardan) et tenue par des bras 15 de suspension a été représentée pour faire mieux comprendre l'invention, seul ledit pneumatique étant en coupe.

Ladite plaque 1A est figurée légèrement concave, et orientée d'un angle A voisin de 45° environ par rapport à l'axe longitudinal $xx_1$ du véhicule (qui correspond à la trace d'un plan longitudinal vertical dudit véhicule dans le plan de la figure 1).

On voit que la roue 7A s'appuiera nécessairement sur ladite plaque 1A (et sur l'écran 6A si il a été placé), en cas de choc conduisant à ce que ladite roue soit poussée vers la paroi 5 de l'habitacle 3 ;

On voit que ladite plaque 1A est fixée, d'une part près de l'angle (l'intersection) que fait ladite paroi 5 de l'habitacle avec les parois latérales 8 dudit véhicule, et d'autre part sur ledit longeron 2. Lesdites plaques 1B et écran 6B sont fixées également sur ledit longeron 2 d'un côté, mais sur une tôle avant 14 du passage des roues, près des pare-chocs 9A de l'autre côté.

C'est donc l'écrasement du pare-chocs, suivi de celui du passage de roues qui conduisent lesdites plaques 1B à s'appuyer sur les roues pour les faire pivoter de force, afin qu'elles n'enfoncent pas l'habitacle, jusqu'à une position représentée figure 4.

Par référence à la figure 2, on voit que, de la même façon que pour ladite plaque de déflexion arrière 1A de ladite roue avant 7A, ladite plaque de déflexion avant 1B de ladite roue avant est légèrement concave et orientée d'un angle B voisin de 45° environ par rapport audit axe longitudinal $xx_1$ dudit véhicule.

On voit que dans l'exemple illustré figure 2, un axe $yy_3$ horizontal, situé dans le plan de la figure 2 passant par les extrémités latérales 13 et 20 de ladite plaque 1B, forme ledit angle B avec la trace $xx_1$, dans le plan de la figure 2, dudit plan $P_1$ vertical, longitudinal dudit véhicule.

On voit également que dans ce mode de réalisation, des écrans 9A et 6B sont prévus respectivement, qui sont montés par des moyens de fixation 17 de type fusible mécanique sur la face externe 21 respective desdites plaques de déflexion 1A et 1B.

Ledit véhicule 18 est muni dans sa partie avant 18A d'un pare-chocs avant 9A et, dans sa partie arrière 18B d'un pare-choc arrière 9B.

La structure de la carrosserie dudit véhicule comporte lesdits longerons 2, qui sont sensiblement longitudinaux et peuvent être sensiblement parallèles à l'axe longitudinal XX1, horizontal correspondant au plan vertical longitudinal P1 dudit véhicule.

En référence à la figure 3, on voit que chacun desdits passages de roues 22 desdites roues avant 7A et roues arrières 7B dudit véhicule sont équipées desdites plaques de déflexion repérées 1A pour la plaque de déflexion arrière des roues avant, 1B pour la plaque de déflexion avant de la roue avant, 1C pour la plaque de déflexion avant de la roue arrière, et 1D pour la plaque de déflexion arrière de la roue arrière.

On voit que pour ce qui concerne la partie gauche du véhicule, un axe yy2 horizontal passant par les extrémités latérales (ou les bords latéraux) de ladite plaque de déflexion arrière 1A de ladite roue avant gauche 7A, rencontre ledit plan P1 en un point W2 qui peut être commun avec le point d'intersection d'un axe yy'2 symétrique dudit axe yy2 et correspondant audit axe yy2 pour ce qui concerne la plaque de déflexion arrière droite de ladite roue avant 7A droite, et en formant un angle A avec ledit plan P1 et/ou ledit axe xx1.

De la même façon, un axe yy3 passant par les extrémités latérales de ladite plaque 1B rencontre ledit plan P1 en un point W1 et en formant un angle B avec ledit plan P1 et/ou ledit axe xx1.

On voit que, conformément à une caractéristique de l'invention, lesdits points W2 et W1 sont respectivement situés en avant desdites plaques respectives 1A et 1B de manière à faciliter en cas de collision, la déformation de la partie avant 18A du véhicule comme indiqué figure 4, c'est-à-dire autorisant et même forçant le pivotement desdites roues par le glissement de celles-ci sur lesdites faces externes desdites plaques de déflexion 1A et 1B prévues dans chacun desdits passages de roues.

De cette sorte, on voit que, comme illustré figure 4, après la collision ayant provoqué par exemple une déformation desdits longerons dans des zones 2A de moindre résistance desdits longerons, et ayant ainsi provoqué le raccourcissement de ceux-ci, ladite roue avant gauche 7A est telle que sa face interne $7A_1$ est dirigée vers l'arrière du véhicule, de même que la face interne $7A_1$ de ladite roue avant droite 7A (la situation représentée figure 4 correspond à une situation où les collisions ont eu lieu sensiblement dans l'axe du véhicule).

En référence à la figure 3, on voit qu'à l'inverse, pour ce qui concerne lesdits plaques de déflexion situées dans ledit passage de roues desdites roues arrières 7B, les axes yy4 et yy5 correspondant respectivement aux axes passant par les extrémités latérales desdites plaques 1C et 1D, coupent en des points respectifs W3 et W4, ledit plan P1 et/ou ledit axe XX1, lesquels points peuvent par ailleurs correspondre aux points d'intersection avec ledit plan d'axes yy'4 et yy'5 définis de la même manière pour lesdites plaques 1C et 1D de la roue arrière droite 7B; on voit que lesdits axes YY4 et YY'4 font ledit angle A' avec ledit plan, lesdits axes yy5 et yy'5 font ledit angle B' avec ledit plan, de sorte que lesdits points W3 et W4 sont situés en arrière respectivement desdites plaques de déflexion avant 1C desdits passages de roues gauche et droit, et desdites plaques arrière 1D desdits passages de roues gauche et droit, de sorte qu'en cas de collision, comme illustré à la figure 4, les faces internes $7B_1$ desdites roues arrières 7B sont dirigées vers l'avant du véhicule, suite au pivotement desdites roues autour d'un axe sensiblement vertical, et à la déformation de la partie arrière 2B desdits longerons 2.

## Revendications

1. Dispositif de déflexion de roues d'un véhicule automobile (18), caractérisé en ce qu'il comporte au moins une plaque (1) de déflexion liée solidement à la carrosserie dudit véhicule, laquelle plaque comporte sur sa face externe (21) un moyen de glissement de pneumatique, laquelle plaque est placée près de la roue, en biais, par rapport à un plan ($P_1$) vertical longitudinal dudit véhicule.

2. Dispositif selon la revendication 1 caractérisé en ce qu'il comporte pour chacune desdites roues avant (7a) dudit véhicule ladite plaque de déflexion avant (1b) disposée sensiblement verticalement, et ladite plaque de déflexion arrière (1a) disposée sensiblement verticalement.

3. Dispositif selon l'une quelconque des revendications 1 à 2, caractérisé en ce que ladite plaque (1) fait un angle (A, B, A', B') avec ledit plan vertical longitudinal dudit véhicule qui est compris entre 20 et 70°.

4. Dispositif selon l'une quelconque des revendications 1 à 3, caractérisé en ce qu'une droite horizontale ($YY_2$, $YY_3$) passant par les extrémités latérales respectives (10, 11) et (19, 20) desdites plaques de déflexion arrière (1A) et avant (1B) de roues avant (7A) dudit véhicule, croise ledit plan vertical longitudinal dudit véhicule en un point respectivement ($W_2$, $W_1$) situé en avant desdites plaques (1a, 1b).

5. Dispositif selon l'une quelconque des revendications 1 à 4, caractérisé en ce qu'une droite horizontale ($YY_5$, YY4) passant par les extrémités latérales respectives desdites plaques de déflexion arrière (1D) et avant (1C) de roues arrière (7B) dudit véhicule, croisent ledit plan vertical longitudinal dudit véhicule en un point respectif (W4, W3) situé respectivement en arrière desdites plaques (1D, 1C).

6. Dispositif selon l'une quelconque des revendications 1 à 5, caractérisé en ce qu'une section verticale ou horizontale de ladite plaque (1) a un profil en forme de droite.

7. Dispositif selon l'une quelconque des revendications 1 à 6, caractérisé en ce que ledit moyen de glissement de pneumatique comporte un produit glissant pour le caoutchouc qui provoque un coefficient de frottement statique entre le caoutchouc et ladite plaque (1) inférieur à 0,3.

8. Dispositif selon la revendication 7, caractérisé en ce que ledit produit glissant est choisi parmi le polytetrafluoroéthylène, un produit graisseux ou huileux, un produit à base de graphite ou de résine silicone.

9. Dispositif selon l'une quelconque des revendications 1 à 8, caractérisé en ce que ledit moyen de glissement de pneumatique comporte un écran (6) épousant la forme de ladite face externe (21) de ladite plaque (1) et placé devant ladite plaque (1), et ledit moyen de glissement comporte un produit glissant appliqué entre ledit écran et ladite plaque de déflexion, ledit écran étant fixé de manière peu solide à ladite plaque (1) par des moyens (17) de fixation.

10. Dispositif selon l'une quelconque des revendications 1 à 8, caractérisé en ce que ledit moyen de glissement de pneumatique comporte un écran (6) épousant la forme de la face externe (21) de ladite plaque (1), principalement constitué d'une matière ayant un faible coefficient de frottement statique avec ladite plaque (1).

11. Dispositif selon l'une quelconque des revendications 1 à 5 ou 7 à 10 caractérisé en ce qu'une section verticale ou horizontal de ladite plaque (1) a un profil en forme de courbe telle que arc de cercle, élipse, parabole, hyperbole, esse, clothoïde.

12. Dispositif selon la revendication 1 caractérisé en ce qu'il comporte dans le réceptacle de roue de secours, une plaque de déflexion de roue de secours perpendiculaire audit plan ($P_1$) et dont la trace dans ledit plan fait un angle de l'ordre de 45° avec l'horizontale.

FIG.1

# FIG. 2

EP 0 502 799 A1

# FIG. 3

# FIG. 4

10

EP 0 502 799 A1

**Office européen des brevets**

## RAPPORT DE RECHERCHE EUROPEENNE

Numero de la demande

EP 92 43 0006

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 208 359 (GENERAL MOTORS CORPORATION) <br> * page 1, ligne 29 - page 2, ligne 26 * <br> * page 3, ligne 14 - page 4, ligne 8 * <br> * figures * <br> --- | 1-6 | B60R19/00 <br> B62D25/08 |
| A | DE-A-2 358 356 (SAAB-SCANIA AB) <br> * page 5, ligne 28 - page 6, ligne 13 * <br> * figures 1-3 * <br> ----- | 1 | |

**DOMAINES TECHNIQUES RECHERCHES (Int. Cl.5)**

B60R
B62D

Le présent rapport a été établi pour toutes les revendications

| Lieu de la recherche | Date d'achèvement de la recherche | Examinateur |
|---|---|---|
| LA HAYE | 10 JUIN 1992 | AREAL CALAMA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

11